# EUROPEAN PATENT SPECIFICATION

(11) **EP 1 833 907 B1**
(45) Date of publication and mention of the grant of the patent: **01.10.2008**
(21) Application number: 05819388.9
(22) Date of filing: 09.12.2005
(51) Int. Cl.: C08L 23/06

(54) **POLYETHYLENE COMPOSITION FOR ARTIFICIAL TURF**
POLYETHYLENZUSAMMENSETZUNG FÜR KUNSTRASEN
COMPOSITION DE POLYETHYLENE DESTINEE A DU GAZON ARTIFICIEL

(30) Priority: 20.12.2004 GB 0427829
(43) Date of publication of application: 19.09.2007
(73) Proprietor: INEOS Manufacturing Belgium NV, 2040 Antwerpen (BE)
(72) Inventor: LAMBERT, Yves-Julien, B-1325 Chaumont Gistoux (BE); PLUME, Denis, Albert, Maurice, B-1000 Brussels (BE)
(74) Representative: Smith, Julian Philip Howard
(86) International application number: PCT/EP2005/013459
(87) International publication number: WO 2006/066777

(56) References cited:
- US-A- 4 013 617
- US-A1- 2002 004 351
- US-A1- 2004 063 861
- US-A1- 2005 063 622

## Description

The present invention relates to tapes and films of polyethylene, and more particularly to artificial turf made from such tapes, films or monofilaments.

Artificial turf has in the past been made from polypropylene. Slit film yarns based on crystalline propylene polymers are typically made by slitting films extruded from compositions comprising polypropylene. However as an artificial turf, polypropylene has certain disadvantages: the strands obtained by mechanical fibrillation of the slit film yarn do not sufficiently withstand crushing and tearing, giving rise to a phenomenon of "postfibrillation" of the slit film yarn after unacceptably short periods of time. Furthermore, polypropene has, live human skin, a comparatively high coefficient of friction, so that when someone slides with their skin along the turf bums can result. This problem is typically reduced by introducing crinkles into the polypropylene, and/or by blending the polypropylene with other compounds such as polyethylene terephthalate. Alternatively the polypropylene can be coextruded with other materials such as LLDPE.

More recently, artificial turf has increasingly been made from polyethylene or a laminate of polyethylene and polypropylene. Polyethylene has a lower coefficient of friction that polypropylene. Linear low density polyethylene is often used, as the low density gives a product which is very soft to the touch. However the strands of grass lack resilience, which means that the turf surface rapidly becomes flattened once in use.

Higher densities of polyethylene may also be used. One current commercial polyethylene product for use in artificial turf comprises about 85% of a polyethylene having a density of 944 kg/m³ and melt index MI₂ of about 0.6 g/10min, mixed with about 15% of a composition comprising a polyethylene having a density of 951 kg/m³ and a melt index of 11 g/10min, plus pigments and other additives. The presence of the pigment raises the density of the final product to about 975 kg/m³.

We have found a polyethylene composition which can be used to provide artificial turf having an improved balance of softness and resilience compared with known turfs. Accordingly in a first aspect the present invention provides a pigmented tape, fibre or filament comprising 75-99.5wt% of an unpigmented polyethylene having a density of 920 -940 kg/m³ and a melt index MI₂ of at least 0.3 g/10mins, and up to 25wt% of a pigmented polyethylene, wherein the total amount of pigment in the tape, fibre or filament is at least 0.5wit%.

Preferably the unpigmented polyethylene has a melt index of no more than 6g/10min, more preferably no more than 2 g/10min. The most preferred range of melt index MI₂ is between 0.5 and 1.5 g/10min.

Preferably the polyethylene resin has a density of 928-938 kg/m³, more preferably 932 -938 kg/m³. It is preferred that the polyethylene is monomodal.

The pigmented polyethylene is preferably present in an amount of from 8-20wt% based on the total composition, and more preferably from 8 to 15wt%. It preferably has a density in the range 900- 960 kg/m³, although it is preferred that the density differs from that of the unpigmented polyethylene by no more than 20 kg/m³, and particularly no more than 10 kg/m³. Most preferably, the pigmented polyethylene is the same resin as the unpigmented one.

Typically, the inclusion of pigment adds about 17-35 kg/m³ to the density of the polyethylene, depending on the amount and type of pigment added. Thus the final pigmented tape, fibre or filament has a density about 17-35 kg/m³ greater than the weight averaged density of the two polyethylene components, although this may be less if a lower level of less dense pigment is used. A second aspect of the invention comprises a polyethylene composition in the form of a pigmented tape, fibre or filament, having a density of 937-972 kg/m³, preferably 945-970 kg/m³, more preferably 964-970 kg/m³. This composition comprises at least 75wt% of a polyethylene having a natural density of 920-940 kg/m³. By "natural density" is meant the density of the pure polyethylene without any additives.

In this specification the melt index MI₂ is measured in accordance with ASTM D-1238 at 190°C with a load of 2.16 kg. The density is measured in accordance with ISO 1183.

Preferably the pigmented tape, fibre or filament of both aspects of the invention has a flexural modulus between 400 and 800 MPa at 23°C when measured according to ISO 178.

Preferably, the unpigmented polyethylene is a copolymer of ethylene and another alpha-olefin containing from 3 to 12 carbon atoms. More preferably, it is a copolymer of ethylene and butene, methylpentene, hexene and/or octene; the most preferred copolymer is 1-hexene.

Preferred catalysts for making the polymer are Ziegler catalysts, although metallocene or chromium catalysts may be used.

The pigmented tape, fibre or filament may additionally contain the usual additives such as antioxidants, light stabilizers, processing aids, reinforcing agents, fillers, flame retardants, biocides, antistatic agents and agents for lowering the friction coefficient such as polyethylene terephthalate and polytetrafluoroethylene. Examples of processing aids include fluoropolymers such as polyvinylidene fluoride or fluorelastomers.

These additives may be present in the pigmented tape, fibre or filament in quantities generally between 0.01 and 15% by weight, preferably between 0.1 and 10% by weight.

The additives and pigments are usually blended with polymer at a ratio of about 50% additives/pigments : 50% polymer to produce a masterbatch of pigmented polymer. The blending of the additives and pigments with the polymer powder is carried out in any mixer which can deliver sufficient homogeneity to the masterbatch (premix). For the blending, a high speed or slow speed mixer may be used, but a high speed mixer is preferred because the speed of the mixing helix can break the agglomerates of pigments and pre-disperse the ingredients in the polymer flake.

Compounding can be carried out with any compounding equipment which is able to obtain clean dry pellets. The concentrated masterbatch of pigmented polyethylene and the main unpigmented polyethylene are fed into the extruder via separate feeders. The main polymer can be fed either in the form of pellets or as a powder. The compounding equipment is chosen so as to achieve an optimal level of dispersion of the ingredients in the melt polymer. It can be either a twin-screw extruder or a corotating or contrarotating screw, designed with an optimal screw profile to disperse the pigments.

The twin screw extruder can be equiped with a gear pump to help to build the pressure necessary to pass through the die. The compounding equipment can be a co-mixer machine system connected to a single screw extruder. This system is comprised of two separate machines: first a continuous mixer (typically Farrel system) or discontinuous mixer machine (typically Banbury system) where the premix and polymer are fed to be melt and dispersed by the rotors, and second a single screw extruder that will push the melt through the die.

The melt material is extruded through the die holes, and is cut and cooled in the form of pellets.

The most common processes for forming artificial turf involve either extruding flat monofilaments, which are then cut into pieces of the required length to form the individual blades of grass, or forming a film which is then slit into tapes to be cut to the required lengths. In a typical extrusion process, the unpigmented polyethylene and the pigmented polyethylene to form pigmented pellets, which are then fed into an extruder and extruded to form a film. Alternatively, the unpigmented polyethylene and pigmented polyethylene may be added directly to the extruder so that the compounding takes place in the extruder.

Film can be produced using well-known processes such as film blowing, film casting, coextrusion, cast film extrusion or lamination in the form of single-layer films, multilayer films or sheets. Multilayer systems can be produced by coextrusion, coating, extrusion coating, laminating or printing. The film is then stretched, and the stretched film cut into tapes which are cut to the required length. This is known as the Lenzing process. In an alternative process (the Iso process), the blown film is cut into tapes prior to stretching. Whichever method of manufacture is used, it is preferred that the resin has been stretched to 3-10 times its original length; typically from 4 to 8 times, and most preferably 6 to 8 times. Stretching improves the tensile strength of the final product.

Where a blown film is required, the polymer exits the extruder via a circular die, and the film is blown from a nozzle in the centre of the die. For flat films, the polymer exits the extruder via a flat die. Flat films are generally thicker than blown films. Typically the film is then stretched at this stage. Stretching is usually carried out in an oven or on a hot plate at a temperature of 100-110°C. Optionally the stretched film may then be annealed. The film is then slit into tapes, which are cut to the required length.

The polyethylene composition forming the tapes, filaments or fibres of the first aspect of the invention is usually converted directly into tapes, filaments or fibres. owever it is possible that it may be coextruded with other resins to form a laminate tape or filament. For example, it is possible to coextrude a film or filament comprising a central layer of polypropylene and outer layers of the polyethylene of the first aspect of the invention. In this particular embodiment, the polypropylene core layer provides additional resilience to the tape, whilst the outer polyethylene layers provide the required softness. However such an arrangement is more complex and expensive to produce, and one of the advantages of the present invention is that adequate properties can be obtained by use of a single layer.

The tapes or filaments may be fibrillated mechanically into finer strands having the appearance of blades of grass. They may be subjected to any of the known treatments conferring suppleness.

The production of the artificial turf from the tapes, fibres or filaments may be performed by any known process, for example by tufting through a synthetic substrate such as a woven or nonwoven cloth, both based on thermoplastic polymer (for example polypropylene).

As is well-known, after-treatments to the tapes, fibres or filaments of the invention in the form of a coating layer eg of a friction-reducing substance such as polytetrafluoroethylene.

### EXAMPLES

### EXAMPLE 1

A Masterbatch was formed comprising Eltex® A3180PN1852 (a commercially available polyethylene having a melt index MI₂ of 21g/10min and a density of 957 kg/m³) and all the other ingredients listed in the table below with the exception of the Rigidex® HD3850UA. This Rigidex resin (a commercially available polyethylene having a melt index MI₂ of 4.5 g/10min and a density of 938 kg/m³) was then blended with the Masterbatch to give a formulation containing the amounts of all the components listed in the table.

| Component | Parts per 1000 |
|---|---|
| RIGIDEX HD3850UA pellets | 893.572 |
| Masterbatch : | |
| ELTEX A3180PN1852 powder | 50 |
| Irganox B215 antioxidant | 3 |
| Stearate Ca lubricant + antiacid | 2.5 |
| Process Aid Dynamar FX 9613 | 0.4 |
| Chimasorb 944 anti UV | 10 |
| Tinuvin 770 anti UV | 2.5 |
| Phtalocyanine Green 7 (Heliogen K8730) | 1.76 |
| Yellow 119 (Color therm 3950) | 26.12 |
| White pigment TiO₂ (Kronos 2081) | 8.54 |
| Black pigment Noir sicoplast D7102 | 1.608 |

This product has a flexural modulus, measured at 23°C according to ISO 178, of approximately 650MPa.

### EXAMPLE 2 (comparative)

In this example, a Masterbatch by mixing 50 parts of Eltex®A5006PFN1281 powder (having a density of 944 kg/m³ and a melt index MI₅ of 1.9 g/10min) and all the other ingredients in the table below. This Masterbatch was then compounded with the remainder of the Eltex resin (about 893 parts) to give a formulation containing the amounts of all the components as listed in the table.

| Component | Parts per 1000 |
|---|---|
| Eltex®A5006PFN1281 powder | 943.572 |
| Irganox B215 (antioxidant) | 3 |
| Stearate Ca (lubricant) | 2.5 |
| Process Aid Dynamar FX 9613 | 0.4 |
| Chimasorb 944 (anti UV) | 10 |
| Tinuvin 770 (anti UV) | 2.5 |
| Phtalocyanine Green 7 (Heliogen K8730) | 1.76 |
| Yellow 119 (Color therm 3950) | 26.12 |
| White pigment TiO₂ (Kronos 2081) | 8.54 |
| Black pigment Noir sicoplast D7102 | 1.608 |

This product has a flexural modulus, measured at 23°C according to ISO178, of approximately 900MPa. This is significantly higher than Example 1, and gives a product which is less soft.

## Claims

1. Pigmented tape, fibre or filament comprising 75-99.5wt% of an unpigmented polyethylene having a density of 920 -940 kg/m³ and a melt index MI₂ of at least 0.3 g/10mins, and up to 25wt% of a pigmented polyethylene, wherein the total amount of pigment in the tape, fibre or filament is at least 0.5wt%.

2. Tape, fibre or filament according to claim 1 wherein the unpigmented polyethylene has a density of 928-938 kg/m³.

3. Tape, fibre or filament according to claim 1 or 2 wherein the unpigmented polyethylene has a melt index MI₂ of no greater than 6 g/10mins, preferably 0.5-1.5 g/10mins.

4. Tape, fibre or filament according to any preceding claim, wherein the density of the pigmented polyethylene differs from that of the unpigmented polyethylene by no more than 20 kg/m³.

5. Tape, fibre or filament according to any preceding claim, wherein the the pigmented , polyethylene is the same as the unpigmented polyethylene.

6. Pigmented tape, fibre or filament comprising a polyethylene composition having a density of 937-972 kg/m³ and comprising at least 75wt% of a polyethylene having a natural density of 920-940 kg/m³.

7. Tape, fibre or filament according to any preceding claim, having a flexural modulus, measured at 23°C according to ISO178, of between 400 and 800MPa.

8. Tape, fibre or filament according to any preceding claim, which has been drawn to 3 - 10 times its original length, preferably 4-8 times.

9. Tape, fibre or filament according to any preceding claim, in the form of artificial turf.

## Patentansprüche

1. Pigmentierter Streifen, pigmentierte Faser oder pigmentiertes Filament, umfassend 75 - 99,5 Ges.-% eines unpigmentierten Polyethylens, das eine Dichte von 920 - 940 kg/m³ und einen Schmelzindex MI₂ von mindestens 0,3 g/10 min hat, und bis zu 25 Gew.-% eines pigmentierten Polyethylens, wobei die Gesamtmenge an Pigment in dem Streifen, der Faser oder dem Filament mindestens 0,5 Gew.-% beträgt.

2. Streifen, Faser oder Filament nach Anspruch 1, wobei das unpigmentierte Polyethylen eine Dichte von 928 - 938 kg/m³ hat.

3. Streifen, Faser oder Filament nach Anspruch 1 oder 2, wobei das unpigmentierte Polyethylen einen Schmelzindex MI₂ von nicht mehr als 6 g/10 min, vorzugsweise 0,5 - 1,5 g/10 min, hat.

4. Streifen, Faser oder Filament nach einem vorhergehenden Anspruch, wobei die Dichte des pigmentierten Polyethylens sich von der des unpigmentierten Polyethylens um nicht mehr als 20 kg/m³ unterscheidet.

5. Streifen, Faser oder Filament nach einem vorhergehenden Anspruch, wobei das pigmentierte Polyethylen dasselbe ist, wie das unpigmentierte Polyethylen.

6. Pigmentierter Streifen, pigmentierte Faser oder pigmentiertes Filament, umfassend eine Polyethylenzusammensetzung mit einer Dichte von 937- 972 kg/m³ und umfassend mindestens 75 Gew.-% eines Polyethylens mit einer Eigendichte von 920 - 940 kg/m³.

7. Streifen, Faser oder Filament nach einem vorhergehenden Anspruch mit einem Biegemodul, gemessen bei 23 °C gemäß ISO 178, zwischen 400 und 800 MPa.

8. Streifen, Faser oder Filament nach einem vorhergehenden Anspruch, der/die/das auf das 3- bis 10fache seiner/ihrer ursprünglichen Länge, vorzugsweise das 4- bis 8fache, gezogen wurde.

9. Streifen, Faser oder Filament nach einem vorhergehenden Anspruch in Form von künstlichem Rasen.

## Revendications

1. Ruban, fibre ou filament pigmenté comprenant 75 à 99,5% en poids de polyéthylène non pigmenté possédant une masse volumique de 920 à 940 kg/m³ et un indice de fusion MI₂ d'au moins 0,3 g/10 minutes, et jusqu'à 25% en poids de polyéthylène pigmenté, la quantité totale de pigment dans le ruban, la fibre ou le filament étant d'au moins 0,5% en poids.

2. Ruban, fibre ou filament selon la revendication 1, dans lequel le polyéthylène non pigmenté possède une masse volumique de 928 à 938 kg/m³.

3. Ruban, fibre ou filament selon la revendication 1 ou 2, dans lequel le polyéthylène non pigmenté possède un indice de fusion MI₂ d'au plus 6 g/10 minutes, de préférence de 0,5 à 1,5 g/10 minutes.

4. Ruban, fibre ou filament selon l'une quelconque des revendications précédentes, dans lequel la masse volumique du polyéthylène pigmenté diffère de celle du polyéthylène non pigmenté d'au plus 20 kg/m³.

5. Ruban, fibre ou filament selon l'une quelconque des revendications précédentes, dans lequel le polyéthylène pigmenté est identique au polyéthylène non pigmenté.

6. Ruban, fibre ou filament pigmenté comprenant une composition de polyéthylènes possédant une masse volumique de 937 à 972 kg/m³ et comprenant au moins 75% en poids d'un polyéthylène possédant une masse volumique naturelle de 920 à 940 kg/m³.

7. Ruban, fibre ou filament selon l'une quelconque des revendications précédentes, possédant un module de flexion, mesuré à 23°C selon la norme ISO178, entre 400 et 800 MPa.

8. Ruban, fibre ou filament selon l'une quelconque des revendications précédentes, qui a été étiré 3 à 10 fois par rapport à sa longueur d'origine, de préférence 4 à 8 fois.

9. Ruban, fibre ou filament selon l'une quelconque des revendications précédentes, sous la forme d'un gazon artificiel.
